# EUROPEAN PATENT APPLICATION

(11) **EP 4 613 539 A1**
(43) Date of publication of application: **10.09.2025**
(21) Application number: 24162426.1
(22) Date of filing: 08.03.2024
(51) Int. Cl.: B60L 50/64, B60L 50/60, B60L 58/26, H01M 10/613, H01M 10/625, H01M 10/6557, H01M 50/20, H01M 50/204, B60K 1/04

(54) **AN ENERGY STORAGE SYSTEM FOR A VEHICLE**

(71) Applicant: VOLVO TRUCK CORPORATION, 405 08 Göteborg (SE)
(72) Inventor: ROUT, Dhirendra, 422 54 GÖTEBORG (SE); IRANNEZHAD, Mike, 411 20 GÖTEBORG (SE); JONSSON, Kasper, 417 57 GÖTEBORG (SE)
(74) Representative: Kransell & Wennborg KB

(57) **Abstract**

An energy storage system (30) for a vehicle (1) having a center vehicle frame structure (3) extending in the longitudinal direction of the vehicle, the energy storage system (30) comprising: a first battery pack group (130) and a second battery pack group (140) arranged opposite each other on opposite first and second sides (4a, 4b) of the center vehicle frame structure (3); a third battery pack group (150) and a fourth battery pack group (160) arranged opposite each other on opposite first and second sides (4a, 4b) of the center vehicle frame structure (3); and a battery disconnection unit (170) arranged in the center vehicle frame structure (3), each one of the first, second, third and fourth battery pack groups (130, 140, 150, 160) being associated with an electrical interface (181, 182, 183, 184) electrically connecting the corresponding battery pack group (130, 140, 150, 160) to the battery disconnection unit (170). The electrical interfaces (181, 182, 183, 184) of all of the first, second, third and fourth battery pack groups (130, 140, 150, 160) are arranged in a common utility accessing area (190) between the battery pack groups (130, 140, 150, 160).

## Description

### TECHNICAL FIELD

The disclosure relates generally to an energy storage system. In particular aspects, the disclosure relates to an energy storage system for a vehicle. The disclosure can be applied to heavy-duty vehicles, such as trucks, buses, and construction equipment, among other vehicle types including marine vessels. Although the disclosure may be described with respect to a particular vehicle, the disclosure is not restricted to any particular vehicle.

### BACKGROUND

Energy storage systems, particularly those used in electric and hybrid vehicles, are critical for the operation, range, and overall performance of the vehicles. Conventional energy storage systems often face challenges related to space utilization, thermal management, electrical connectivity, and modular scalability. Conventional systems typically utilize uniform battery packs with a one-size-fits-all approach, limiting the adaptability of the system to different vehicle sizes, designs, and performance requirements. Furthermore, the arrangement of the battery packs within the vehicle often does not optimize the available space, and/or faces complicating maintenance access. For example, the arrangement of the electrical connectivity, or the electrical interfaces, of the battery packs in such systems can be suboptimal, with cumbersome access for maintenance and diagnostics.

As vehicles evolve to meet diverse operational demands and incorporate varying technologies, the need for a more adaptable, efficient, and service-friendly energy storage systems becomes increasingly apparent.

### SUMMARY

According to a first aspect of the disclosure, an energy storage system for a vehicle having a center vehicle frame structure extending in the longitudinal direction of the vehicle is provided. The energy storage system comprises: a first battery pack group and a second battery pack group arranged opposite each other on opposite first and second sides of the center vehicle frame structure, each one of the first and second battery pack groups comprising a plurality of series-connected battery packs; a third battery pack group and a fourth battery pack group arranged opposite each other on opposite first and second sides of the center vehicle frame structure, each one of the third and fourth battery pack groups comprising a plurality of series-connected battery packs; and a battery disconnection unit arranged in the center vehicle frame structure, each one of the first, second, third and fourth battery pack groups being associated with an electrical interface electrically connecting the corresponding battery pack group to the battery disconnection unit; wherein the first and third battery pack groups on the first side of the center vehicle frame structure are arranged separated from each other, and wherein the second and fourth battery pack groups on the second side of the center vehicle frame structure are arranged separated from each other, to form a common utility accessing area in which the electrical interfaces of all of the first, second, third and fourth battery pack groups are arranged. The first aspect of the disclosure may seek to overcome problems with energy storage systems being difficult to manage. That is, by the first aspect, and in particular owing to the common utility accessing area, accessing the battery pack groups for e.g. maintenance is facilitated. In other words, all of the electrical interfaces of the first, second, third and fourth battery pack groups, electrically connecting the battery pack groups to the battery disconnection unit, may be accessed from one position, i.e. the common utility accessing area. A technical benefit may include improved management of the energy storage system. The energy storage system may be defined to extend along a longitudinal axis (extending in the longitudinal direction of the vehicle), and along a transversal axis being perpendicular to the longitudinal axis. Thus, the first and second battery pack groups may be arranged along the same transversal axis, and the third and fourth battery pack groups arranged along the same transversal axis, different to that of the first and second battery pack groups. In other words, the first and second battery pack groups may be described as being arranged side-by-side but on opposite sides of the vehicle frame structure. Correspondingly, the third and fourth battery pack groups may be described as being arranged side-by-side but on opposite sides of the vehicle frame structure. It should be noted that each one of the battery packs in the first, second, third and fourth battery pack groups typically comprises a plurality of battery cells being series-connected and/or parallelly connected. For example, a predetermined number of the battery cells in one battery pack may be connected in parallel to form a "logical cell" and then several "logical cells" may be connected in series inside the battery pack. Moreover, each one of the battery packs typically comprises a separate battery pack housing for housing the plurality of battery cells, and corresponding battery pack terminals for interconnecting the battery packs in one of the same battery pack groups. The series-connected battery packs of a battery pack group may e.g. be at least two, or at least three battery packs. It should also be noted that at least one of the series-connected battery packs of a battery pack group may be at least temporarily disconnected from the other battery pack(s) in the same battery pack group, e.g. for maintenance reasons or because the battery pack is temporarily not needed.

Optionally in some examples, including in at least one preferred example, a corresponding first battery pack in each one of the first and third battery pack groups is box-shaped and includes at least a front side, wherein the front side of the first battery pack in the first battery pack group is arranged to face the front side of the first battery pack in the third battery pack group. In other words, the front sides of at least two battery packs in the first and third battery groups are facing each other. Hereby, the common utility accessing area is arranged at least in between the front sides of the first battery packs for the first and third battery pack groups. Correspondingly, and in some examples, including in at least one preferred example, a corresponding first battery pack in each one of the second and fourth battery pack groups is box-shaped and includes at least a front side, wherein the front side of the first battery pack in the second battery pack group is arranged to face the front side of the first battery pack in the fourth battery pack group. In other words, the front sides of at least two battery packs in the second and fourth battery groups are facing each other. Hereby, the common utility accessing area is arranged at least in between the front sides of the first battery packs for the second and fourth battery pack groups. For example, the common utility accessing area may be defined as a continuous area, or continuous space, extending at least in a longitudinal direction between the front sides of the first battery packs in the first, second, third and fourth battery pack groups, and in a transversal direction form the first or third battery pack group to the second or fourth battery pack group.

Optionally in some examples, including in at least one preferred example, the electrical interfaces associated with the first, second, third and fourth battery pack groups are comprised in the battery disconnection unit. A technical benefit may include facilitated accessing to the electrical interfaces in the common utility accessing area. Alternatively, in some examples, including in at least one preferred example, the electrical interfaces associated with the first, second, third and fourth battery pack groups are comprised in a battery pack (e.g. the first battery pack) in the corresponding battery pack group. A technical benefit may include facilitated accessing to the electrical interfaces in the common utility accessing area. The electrical interfaces electrically connecting the battery pack groups to the battery disconnection unit are typically associated with electrical connections, e.g. power cables or power busbars, of the energy storage system enabling electrical connectivity over a distance between the battery pack groups and the battery disconnection unit.

Optionally in some examples, including in at least one preferred example, the electrical interfaces for the first, second, third, and fourth battery pack groups include connectors that are accessible from the common utility accessing area for maintenance and/or diagnostics. A technical benefit may include facilitated accessing of the connectors. The connectors may e.g. provide electrical connections between the respective battery pack group and the battery disconnection unit. For example, the connectors may be corresponding battery pack terminals, or BDU terminals comprised in the battery disconnection unit (BDU).

Optionally in some examples, including in at least one preferred example, the battery disconnection unit comprises a housing including at least one closable service opening, wherein the electrical interfaces for the first, second, third, and fourth battery pack groups are accessible from the at least one closable service opening. A technical benefit may include facilitated accessing to the electrical interfaces. Thus, the electrical interfaces associated with the first, second, third and fourth battery pack groups may be comprised in the battery disconnection unit, adjacent the at least one closable service opening. For example, the previously mentioned connectors may be arranged adj acent the at least one closable service opening. Moreover, the at least one closable service opening may be at least two closable service openings, e.g. a first closable service opening for accessing the electrical interfaces for the first and third battery pack groups and a second closable service opening for accessing the electrical interfaces for the second and fourth battery pack groups. Alternatively, the at least one closable service opening may be at least four closable service openings, e.g. an individual closable service opening for accessing the electrical interfaces for each one of the first, second, third and fourth battery pack groups. It should be understood that the housing for the battery disconnection unit is arranged externally, or distant to, the housings of the battery packs of the battery pack groups.

Optionally in some examples, including in at least one preferred example, the at least one closable service opening is arranged in the center vehicle frame structure. A technical benefit may include facilitated accessing to the electrical interfaces. For example, the at least one closable service opening may be arranged in the center vehicle frame structure facing downwards. Downwards is here referring to a direction of the force of gravity.

Optionally in some examples, including in at least one preferred example, the battery disconnection unit is configured to independently disconnect each one of the first, second, third, and fourth battery pack groups. A technical benefit may include improved management of the first, second, third and fourth battery pack groups. For example, the battery disconnection unit may comprise a contactor for each one of the first, second, third, and fourth battery pack groups, wherein the contactors are configurable in a closed state for achieving an electrical connection to the battery pack groups, and in an open state for breaking the electrical connection with the battery pack groups. The contactors may form part of, or constitute, the previously mentioned electrical interfaces of the first, second, third and fourth battery pack groups. The battery disconnection unit may e.g. comprise one or more BDU terminals for providing the electrical connection to the battery pack groups, wherein the contactors are arranged to break the electrical connection from the BDU terminals. Moreover, the battery disconnection unit may comprise an outgoing terminal, e.g. for providing electrical connection to a load, e.g. an electric traction machine of the vehicle. Thus, the first, second, third and fourth battery pack groups may be arranged to power the load via the electrical connections via the battery disconnection unit.

Optionally in some examples, including in at least one preferred example, the battery disconnection unit is configured to concurrently disconnect all of the battery packs in one and the same battery pack group for at least one of the first, second, third and fourth battery pack groups. A technical benefit may include improved management of the first, second, third and fourth battery pack groups.

Optionally in some examples, including in at least one preferred example, the battery packs in each one of the first, second, third, and fourth battery pack groups are configured in a modular design, allowing for the addition of battery packs and/or replacement of individual battery packs. A technical benefit may include a scalable energy storage system. For example, the operating voltage of each one of the first, second, third and fourth battery pack groups is scalable by the number of battery packs in each one of the first, second, third and fourth battery pack groups.

Optionally in some examples, including in at least one preferred example, the energy storage system further comprises a cooling system for cooling the battery packs in the first, second, third and fourth battery pack groups, the cooling system comprising piping extending from the center vehicle frame structure to the first, second, third and fourth battery packs groups via the common utility accessing area. A technical benefit may include improved management of the energy storage system. Thus, the common utility accessing area may additionally be used for piping of the cooling system.

Optionally in some examples, including in at least one preferred example, the piping comprises at least one maintenance piping portion that is accessible from the common utility accessing area for maintenance and/or diagnostics. A technical benefit may include facilitated accessing to the maintenance piping portion in the common utility accessing area.

Optionally in some examples, including in at least one preferred example, the cooling system comprises a liquid coolant to manage the temperature of the battery packs in the first, second, third and fourth battery pack groups. A technical benefit may include improved cooling of the battery packs in the first, second, third and fourth battery pack groups.

Optionally in some examples, including in at least one preferred example, each one of the first, second, third, and fourth battery pack groups comprises an associated battery pack venting facing the common utility accessing area. A technical benefit may include improved management of the energy storage system. Thus, the common utility accessing area may additionally be used for providing necessary venting space for the first, second, third and fourth battery pack groups. For example, each one of the previously mentioned first battery packs comprises the battery pack venting.

Optionally in some examples, including in at least one preferred example, the battery packs of the first and second battery pack groups are of a first type, and the battery packs of the third and fourth battery pack groups are of a second type, different to the first type. A technical benefit may include improved flexibility of the energy storage system. The use of two different types of battery packs allows the energy storage system to be tailored for specific applications or operational requirements. For instance, one type of battery packs may offer higher energy density for longer range, while the other may provide higher power density for better acceleration in vehicles. This versatility enables the energy storage system to meet varied performance criteria. Moreover, by incorporating battery packs of different types, the energy storage system can more effectively manage energy storage and discharge based on the demands of the use case. For example, during peak load demands, the energy storage system may be configured to prioritize discharge from the battery type that offers higher power output, while for sustained energy release, it could rely on the type with higher energy capacity. This dynamic energy management can improve the overall efficiency and longevity of the energy storage system.

Optionally in some examples, including in at least one preferred example, the battery packs of the first type comprise a different type of battery cell technology compared to the battery packs of the second type. A technical benefit may include improved flexibility of the energy storage system, e.g. as discussed in the previous paragraph.

Optionally in some examples, including in at least one preferred example, the battery packs of the first type are of a different size compared to the battery packs of the second type. A technical benefit may include improved flexibility of the energy storage system, e.g. as discussed in the previous paragraph. In particular, different sizes of battery packs may allow for optimized energy density and storage capacity within the energy storage system. Larger battery packs might be used where higher power and/or energy capacity is needed, while smaller battery packs can be utilized in space-constrained areas, improving the flexibility in system design. Varying the size of battery packs may also enable the energy storage system to be more adaptable to different vehicle designs and corresponding spaces.

Optionally in some examples, including in at least one preferred example, the center vehicle frame structure comprises at least two longitudinal frame portions forming a compartment for housing the battery disconnection unit. A technical benefit may include an improved arrangement of the battery disconnection unit. For example, the space between the two longitudinal frame portions is utilized in a space-efficient manner. Moreover, the battery disconnection unit may be better protected from impact owing to the two longitudinal frame portions. Moreover, this configuration facilitates centralized access for maintenance or replacement of the battery disconnection unit.

Optionally in some examples, including in at least one preferred example, the center vehicle frame structure is forming a part of the main vehicle frame structure. A technical benefit may include enhanced overall rigidity and strength for the structure housing the battery disconnection unit.

Optionally in some examples, including in at least one preferred example, the longitudinal extension of the common utility accessing area is determined by a predefined ratio to the combined volume of the first, second, third, and fourth battery pack groups. A technical benefit may include a scalable and adaptable design, e.g. allowing the energy storage system to maintain functionality and accessibility through the common utility accessing area for various vehicle sizes and battery configurations.

Optionally in some examples, including in at least one preferred example, the common utility accessing area has a longitudinal extension of at least 0.2 meter. A technical benefit may include sufficient space for technicians to perform necessary operations in the common utility accessing area, e.g. enhancing serviceability and reducing maintenance time.

Optionally in some examples, including in at least one preferred example, each one of the battery packs in the first, second, third and fourth battery pack groups does not house a battery disconnection unit comprising at least a contactor. A technical benefit may include space-efficient battery packs. Thus, centralizing the contactor functionality to the battery disconnection unit may reduce manufacturing costs and complexity of the energy storage system, making the system more economical to produce and maintain. However, it should be mentioned that in some examples, including in at least one preferred example, each one of the battery packs in the first, second, third and fourth battery pack groups house a fuse, e.g. a pyro-fuse, for isolating the battery pack in case of electrical failure. Moreover, in some examples, each one of the battery packs in the first, second, third and fourth battery pack groups house a battery disconnection component, such as e.g. a contactor. Thus, at least one corresponding battery disconnection component may be housed in the battery packs, while other battery disconnection components, e.g. PCB including battery management functionality, are comprised in the battery disconnection unit externally of the battery packs.

Optionally in some examples, including in at least one preferred example, the battery disconnection unit comprises a PCB including battery management functionality. A technical benefit may include additional shared functionality of the battery packs of the first, second, third and fourth battery pack groups.

According to a second aspect of the disclosure, a vehicle comprising the energy storage system of the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the vehicle further comprises an electric machine for propelling the vehicle, the electric machine being powered by the energy storage system.

Optionally in some examples, including in at least one preferred example, the operating voltage of the energy storage system is adaptable by the number of battery packs in the first, second, third and/or fourth battery pack groups, wherein the number of battery packs in the energy storage system corresponds to the associated requirements of the electric machine. A technical benefit may include an efficient way to adapt the operating voltage of the energy storage system of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, perspective view of an electric vehicle comprising an electric machine for propelling the vehicle and an energy storage system for powering the electric machine according to one example.
**FIG. 2** is an exemplary, partly schematic, perspective view of the energy storage system according to one example.
**FIG. 3** is an exemplary schematic top view of the energy storage system according to one example.
**FIG. 4** is an exemplary schematic side view of the energy storage system according to one example.

### DETAILED DESCRIPTION

The detailed description set forth below provides information and examples of the disclosed technology with sufficient detail to enable those skilled in the art to practice the disclosure.

The disclosed technology may solve the problem relating to difficulties in managing an energy storage system. The disclosed technology provides an improved arrangement/positioning of the electrical interfaces of the battery pack groups, at least those electrically connecting the corresponding battery pack group to the battery disconnection unit. That is, as the electrical interfaces of the battery pack groups are arranged in the common utility accessing area formed by the physical separation of the battery pack groups, the accessibility thereof is improved. A technical benefit may include improved management of the energy storage system. By sharing a common battery disconnection unit between the battery pack groups, and providing a common utility accessing area in which the electrical interfaces electrically connecting the battery pack groups to the battery disconnection unit are arranged, the associated electrical connections can be routed to the same position or area of the energy storage system, and thereby the electrical interfaces may be more easily accessed and managed.

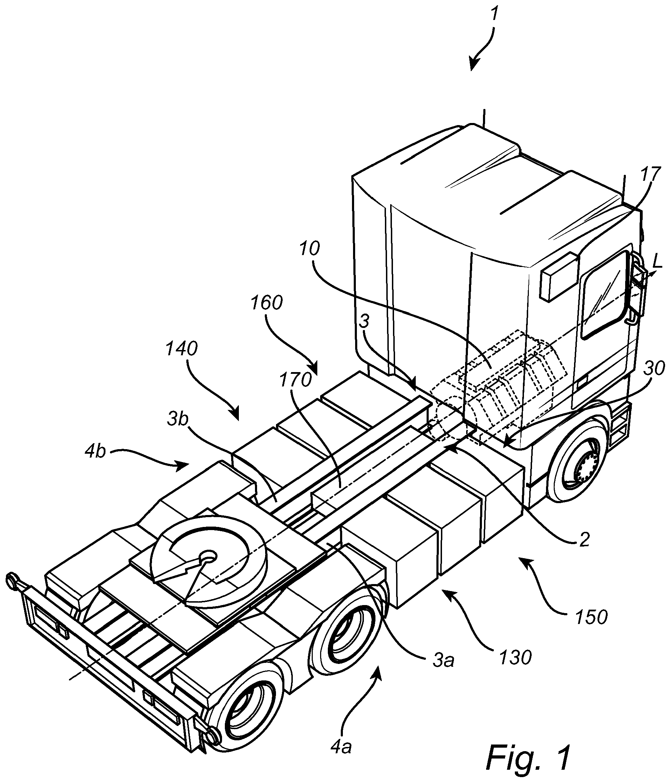

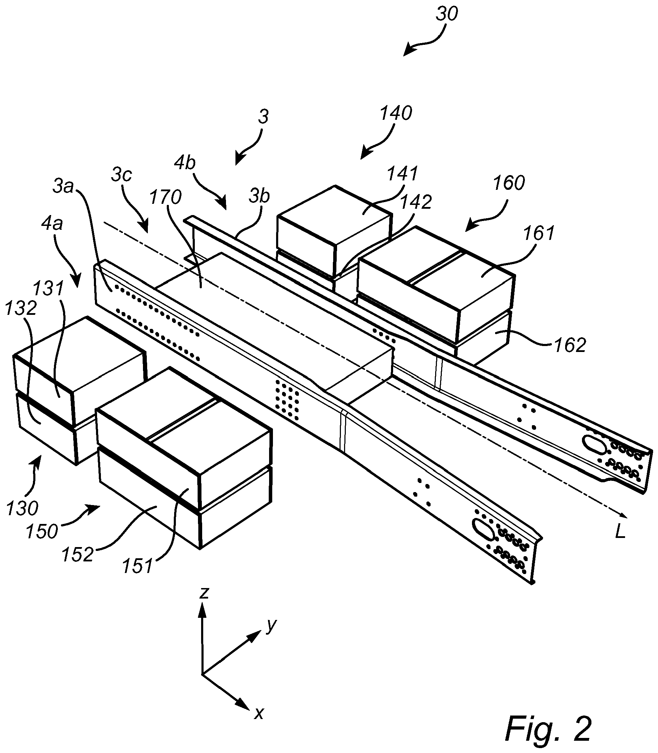

**FIG. 1** shows a vehicle 1 in the form of an exemplary heavy-duty truck. The vehicle 1 comprises a center vehicle frame structure 3 forming part of the main vehicle frame structure 2. The vehicle 1, and the center vehicle frame structure 3, extends in a longitudinal direction L of the vehicle 1. The vehicle 1 is an electric vehicle, such as a full electric vehicle or a hybrid, comprising at least one electric machine 10 (as an electric traction machine) powered by an energy storage system 30, wherein in the example of Fig. 1, the energy storage system 30 comprises four battery pack groups 130, 140, 150, 160. A first battery pack group 130 and a second battery pack group 140 are arranged opposite each other on opposite first and second sides 4a, 4b of the center vehicle frame structure 3. Correspondingly, a third battery pack group 150 and a fourth battery pack group 160 are arranged opposite each other on opposite first and second sides 4a, 4b of the center vehicle frame structure 3. Each battery pack group 130, 140, 150, 160 comprises a plurality of series-connected battery packs (shown in Fig. 2). The battery pack groups 130, 140, 150, 160 are configured to power at least one load, such as the electric machine 10. It should be noted that not all of the series-connected battery packs always need to be contributing to power the load. For example, at least one of the battery packs in at least one of the battery pack groups 130, 140, 150, 160 may be at least temporarily disconnected from the other battery pack(s) in the same battery pack group 130, 140, 150, 160. Thus, the energy storage system 30 may be designed to allow for flexibility in the connection of the battery packs in each battery pack group, enabling the series-connected battery packs to commonly power the load in certain applications, and allowing temporarily disconnection of at least one battery pack to commonly, or independently, power the load by the connected battery pack(s) in certain other applications. Moreover, the vehicle 1 comprises a control unit 17 arranged and configured for controlling at least parts of the operation of the energy storage system 30, such as the operation of a battery disconnection unit 170 of the energy storage system 30. The control unit 17 is only schematically shown in Fig. 1, and it may e.g. be comprised in the battery disconnection unit 170. The vehicle 1 typically further comprises other parts of the powertrain such as transmission, drive shafts and wheels (not shown in detail). The electric machine 10 may be operated as an electric motor consuming electricity provided by the battery packs in the four battery pack groups 130, 140, 150, 160, e.g. to provide propulsion power, and may be operated as a generator to generate electricity to charge the battery packs in the four battery pack groups 130, 140, 150, 160.

With further reference to **FIG. 2** showing the energy storage system 30 of Fig. 1 in greater detail. The longitudinal direction L of the center vehicle frame structure 3 is shown together with the first battery pack group 130 being arranged opposite the second battery pack group 140 on opposite first and second sides 4a, 4b of the center vehicle frame structure 3, and the third battery pack group 150 being arranged opposite the fourth battery pack group 160 on opposite first and second sides 4a, 4b of the center vehicle frame structure 3. Each one of the first, second, third and fourth battery pack groups 130, 140, 150, 160 comprises at least a corresponding first battery pack 131, 141, 151, 161 and a corresponding second battery pack 132, 142, 152, 162.

As also shown in Fig. 2, a battery disconnection unit 170 is arranged in the center vehicle frame structure 3. The center vehicle frame structure 3 is here forming a part of the vehicle main frame structure 2 (shown in Fig. 1) and comprises two longitudinal frame portions 3a, 3b forming a compartment 3c for housing the battery disconnection unit 170. The two longitudinal frame portions 3a, 3b are parallel and forms a cuboid (e.g. rectangular cuboid) or rectangularly shaped compartment 3c. Thus, the battery disconnection unit 170 is arranged within the two parallel longitudinal frame portions 3a, 3b, and the battery packs 131, 132, 141, 142, 151, 152, 161, 162 of the first, second, third and fourth battery pack groups 130, 140, 150, 160 are arranged outside of the two parallel longitudinal frame portions 3a, 3b relative to the compartment 3c. The battery disconnection unit 170 is typically configured to connect and disconnect the first, second, third and fourth battery pack groups 130, 140, 150, 160 to and from a power source and/or a load, such as the electric machine 10. However, it should be mentioned that each one, or at least some, of the battery packs 131, 132, 141, 142, 151, 152, 161, 162 in the first, second, third and fourth battery pack groups 130, 140, 150, 160 may house a battery disconnection component, such as e.g. a contactor for connecting and disconnecting the corresponding battery pack to and from another battery pack in the same battery pack group 130, 140, 150, 160, a power source and/or a load. Thus, at least one corresponding battery disconnection component may be housed in at least one of the battery packs 131, 132, 141, 142, 151, 152, 161, 162.

The battery packs 131, 132, 141, 142 of the first and second battery pack groups 130, 140 are of a first type, and the battery packs 151, 152, 161, 162 of the third and fourth battery pack groups 150, 160 are of a second type, different from the first type. As shown in Fig. 2, the battery packs 131, 132, 141, 142 of the first type are of a different size compared to the battery packs 151, 152, 161, 162 of the second type. In more detail, the battery packs 131, 132, 141, 142 of the first type are smaller than the battery packs 151, 152, 161, 162 of the second type. The size is here referring to the occupied space, or the total volume, of the battery packs 131, 132, 141, 142, 151, 152, 161, 162. However, typically, for the same power density, the second type of battery packs 151, 152, 161, 162 offer a higher power as compared to the battery packs 131, 132, 141, 142 of the first type. It should be mentioned that the battery packs 131, 132, 141, 142 of the first type may additionally, or alternatively, comprise a different type of battery cell technology compared to the battery packs 151, 152, 161, 162 of the second type.

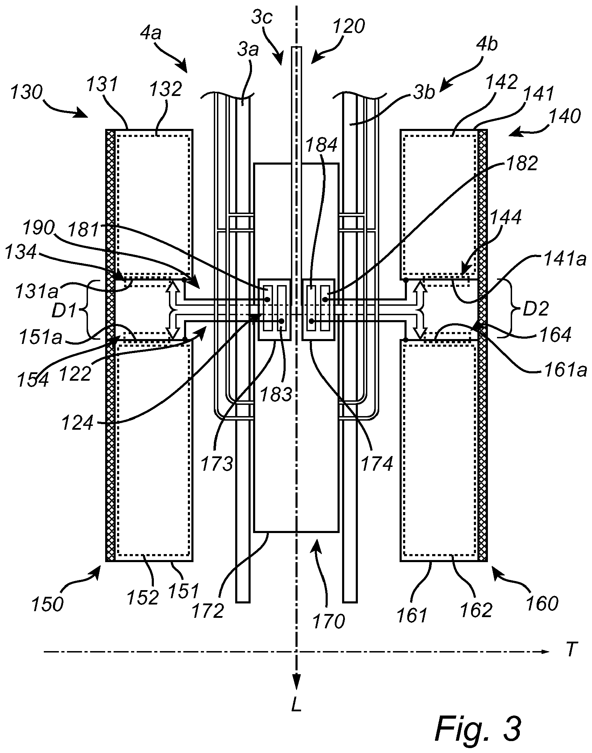

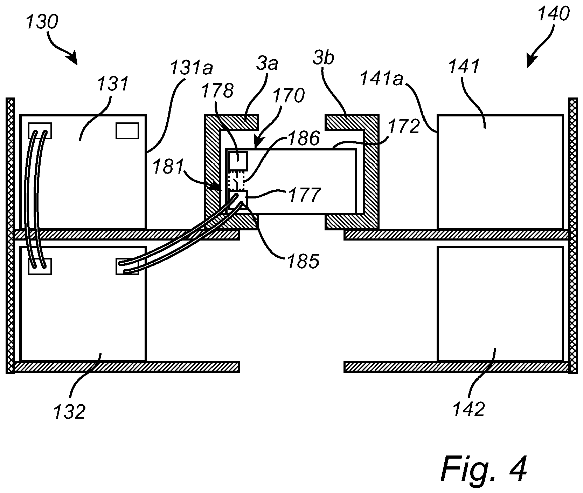

Turning to **FIG. 3** showing a top view, and **FIG. 4** showing a side view, of the energy storage system 30 of Figs. 1 and 2. In Fig. 4, only the first and second battery pack groups 130, 140 are shown. As shown in Fig. 3, each one of the first, second, third and fourth battery pack groups 130, 140, 150, 160 are associated with a corresponding electrical interface 181, 182, 183, 184. In more detail, a first electrical interface 181 electrically connects the first battery pack group 130 to the battery disconnection unit 170, a second electrical interface 182 electrically connects the second battery pack group 140 to the battery disconnection unit 170, a third electrical interface 183 electrically connects the third battery pack group 150 to the battery disconnection unit 170, and a fourth electrical interface 184 electrically connects the fourth battery pack group 160 to the battery disconnection unit 170. The first, second, third and fourth electrical interfaces 181, 182, 183, 184 may e.g. include connectors 185 (as e.g. shown for the first electrical interface 181 in Fig. 4). The electrical interfaces 181, 182, 183, 184 of all of the first, second, third and fourth battery pack groups 130, 140, 150, 160 are arranged in a common utility accessing area 190 between the battery pack groups 130, 140, 150, 160, and are thus accessible from the common utility accessing area 190 for maintenance and/or diagnostics, as will be described in the following.

The battery disconnection unit 170 may be configured to independently disconnect each one of the first, second, third, and fourth battery pack groups 130, 140, 150, 160. For example, the battery disconnection unit 170 may comprise a separate contactor 186 (only shown for the first battery pack group 130 in Fig. 4) for each one of the first, second, third, and fourth battery pack groups 130, 140, 150, 160. The contactors 186 may be configurable in a closed state for achieving an electrical connection to the corresponding first, second, third and fourth battery pack groups 130, 140, 150, 160, and in an open state for breaking the electrical connection. The contactors 186 may form part of, or constitute, the previously mentioned first, second, third and fourth electrical interfaces 181, 182, 183, 184. The battery disconnection unit 170 may e.g. comprise one or more BDU terminals 177 (again, only shown for the first battery pack group 130 in Fig. 4) for providing the electrical connection to the battery pack groups 130, 140, 150, 160. The contactors 186 may e.g. be configured to break the electrical connection from the BDU terminals 177. Moreover, the battery disconnection unit 170 may comprise an outgoing terminal 178, e.g. for providing electrical connection to a load, e.g. an electric traction machine 10 of the vehicle 1. Thus, the first, second, third and fourth battery pack groups 130, 140, 150, 160 may be arranged to power the load 10 via the contactors 186 via the battery disconnection unit 170. For example, the battery disconnection unit 170 may be configured to concurrently disconnect all of the battery packs, such as the corresponding first and second battery packs 131, 132, 141, 142, 151, 152, 161, 162 in one and the same battery pack group 130, 140, 150, 160. For example, as shown in Fig. 4, by opening the contactor 186, and as the first and second battery packs 131, 132 of the first battery pack group 130 are series connected, both the first and second battery packs 131, 132 will be concurrently disconnected.

As also shown in Fig. 3, the first and third battery pack groups 130, 150 on the first side 4a of the center vehicle frame structure 3 are arranged separated from each other by a predetermined distance D1, and the second and fourth battery pack groups 140, 160 on the second side 4b of the center vehicle frame structure 3 are arranged separated from each other by a predetermined distance D2. Here, D1 is the same as D2, but it may according to some examples differ. The common utility accessing area 190 is formed in the space formed by the predetermined distances D1, D2 of the battery pack groups 130, 140, 150, 160. The common utility accessing area 190 may e.g. have a longitudinal extension of at least 0.2 meter. In more detail, the energy storage system 30 may be defined to extend along a longitudinal axis in the longitudinal direction L, and to extend along a transversal axis in a transversal direction T being perpendicular to the longitudinal direction L. Thus, the first and second battery pack groups 130, 140 may be arranged along the same transversal axis, and the third and fourth battery pack groups 150, 160 may be arranged along the same transversal axis, different to that of the first and second battery pack groups 130, 140. The common utility accessing area 190 may e.g. be defined as the occupied space between the first and third battery pack groups 130, 150 (as defined by the predetermined distance D1) and between the second and fourth battery pack groups 140, 160 (as defined by the predetermined distance D2), times the height of the first and/or second battery pack(s) 131, 132, 141, 142, 151, 152, 161, 162, and the width along the transversal axis from an outer border of the first or third battery pack group 130, 150 to an outer border of the second or fourth battery pack group 140, 160. With further reference to Fig. 2 and the three dimensional cartesian coordinate system with x, y, and z-axis, the predetermined distances D1, D2 corresponds to distances along the x-axis, the height corresponds to distances along the z-axis and the width corresponds to distances along the y-axis. The common utility accessing area 190 may e.g. be shaped as a cuboid. According to some examples, the longitudinal extension of the common utility accessing area 190 is determined by a predefined ratio to the combined volume of the first, second, third, and fourth battery pack groups 130, 140, 150, 160.

As shown in Figs. 3 and 4, each one of the first battery pack 131 of the first battery pack group 130 and the first battery pack 151 of the third battery pack group 150 is box-shaped and includes a corresponding a front side 131a, 151a. The front sides 131a, 151a of the first battery packs 131, 151 in the first and third battery pack groups 130, 150 are arranged to face each other. Correspondingly, each one of the first battery pack 141 of the second battery pack group 140 and the first battery pack 161 of the fourth battery pack group 160 is box-shaped and includes a corresponding a front side 141a, 161a. The front sides 141a, 161a of the first battery packs 141, 161 in the second and fourth battery pack groups 140, 160 are arranged to face each other. Hereby, the common utility accessing area 190 may be described as being arranged in between the front sides 131a, 141a, 151a, 161a of the first battery packs 131, 141, 151, 161 for the first, second, third and fourth battery pack groups 130, 140, 150, 160, and along the transversal axis from the first or third battery pack group 130, 150 to the second or fourth battery pack group 140, 160.

The battery disconnection unit 170 comprises a housing 172 including at least one closable service opening 173, 174, here exemplified as a first closable service opening 173 and a second closable service opening 174. The first and second closable service opening 173, 174 are arranged in the center vehicle frame structure 3 between the two longitudinal frame portions 3a, 3b. The first and third electrical interfaces 181, 183 are arranged accessible through the first closable service opening 173, and the second and fourth electrical interfaces 182, 184 are arranged accessible through the second closable service opening 174. For example, the first and third electrical interfaces 181, 183 are arranged adjacent, e.g. within 0.2 m, of the first closable service opening 173, and the second and fourth electrical interfaces 182, 184 are arranged adjacent, e.g. within 0.2 m, of the second closable service opening 174. As shown in Fig. 3, the first and second closable service opening 173, 174 are arranged in the center vehicle frame structure 3 and in the common utility accessing area 190. Thus, the first, second, third and fourth electrical interfaces 181, 182, 183, 184 are arranged in the common utility accessing area 190, and also in the compartment 3c in the center vehicle frame structure 3. Hereby, accessing the battery pack groups 130, 140, 150, 160 for e.g. maintenance is facilitated.

As shown mainly in Fig. 3, the energy storage system 30 may further comprise a cooling system 120 for cooling the battery packs 131, 132, 141, 142, 151, 152, 161, 162 in the four battery pack groups 130, 140, 150, 160. The cooling system 120 typically comprises a liquid coolant to manage the temperature of the battery packs 131, 132, 141, 142, 151, 152, 161, 162. The cooling system comprises piping 122 extending from the center vehicle frame structure 3 to the first, second, third and fourth battery packs groups via the common utility accessing area 190. The piping 122 comprises at least one maintenance piping portion 124 that is accessible from the common utility accessing area 190 for maintenance and/or diagnostics. As shown in Fig. 3, the maintenance piping portion 124 is arranged accessible by the first and second closable service openings 173, 174.

Each one of the first, second, third, and fourth battery pack groups 130, 140, 150, 160 may comprises an associated battery pack venting 134, 144, 154, 164 (schematically shown in Fig. 3) facing the common utility accessing area 190. For example, each one of the previously mentioned first battery packs 131, 141, 151, 161 comprises the battery pack venting 134, 144, 154, 164. Thus, the common utility accessing area 190 may additionally be used for providing necessary venting space for the first, second, third and fourth battery pack groups 130, 140, 150, 160.

It should be understood that more battery packs may be added to any one of the first, second, third and fourth battery pack groups 130, 140, 150, 160. Thus, each of the battery packs, such as the corresponding first and second battery packs 131, 132, 141, 142, 151, 152, 161, 162 in each one of the first, second, third, and fourth battery pack groups 130, 140, 150, 160 may be configured in a modular design, allowing for the addition of battery packs and/or replacement of any present battery pack 131, 132, 141, 142, 151, 152, 161, 162.

The battery disconnection unit 170 may comprise all the contactors, or at least one contactor for each one of, the battery packs 131, 132, 141, 142, 151, 152, 161, 162. According to one example, each one of the battery packs 131, 132, 141, 142, 151, 152, 161, 162 in the first, second, third and fourth battery pack groups 130, 140, 150, 160 does not house a battery disconnection unit comprising at least a contactor for connecting and disconnecting the corresponding battery pack 131, 132, 141, 142, 151, 152, 161, 162 to the load.

Example 1. An energy storage system for a vehicle having a center vehicle frame structure extending in the longitudinal direction of the vehicle, the energy storage system comprising: a first battery pack group and a second battery pack group arranged opposite each other on opposite first and second sides of the center vehicle frame structure, each one of the first and second battery pack groups comprising a plurality of series-connected battery packs; a third battery pack group and a fourth battery pack group arranged opposite each other on opposite first and second sides of the center vehicle frame structure, each one of the third and fourth battery pack groups comprising a plurality of series-connected battery packs; and a battery disconnection unit arranged in the center vehicle frame structure, each one of the first, second, third and fourth battery pack groups being associated with an electrical interface electrically connecting the corresponding battery pack group to the battery disconnection unit; wherein the first and third battery pack groups on the first side of the center vehicle frame structure are arranged separated from each other, and wherein the second and fourth battery pack groups on the second side of the center vehicle frame structure are arranged separated from each other, to form a common utility accessing area in which the electrical interfaces of all of the first, second, third and fourth battery pack groups are arranged.

Example 2. The energy storage system of example 1, wherein the electrical interfaces for the first, second, third, and fourth battery pack groups include connectors that are accessible from the common utility accessing area for maintenance and/or diagnostics.

Example 3. The energy storage system of any of examples 1-2, wherein the battery disconnection unit comprises a housing including at least one closable service opening, wherein the electrical interfaces for the first, second, third, and fourth battery pack groups are accessible from the at least one closable service opening.

Example 4. The energy storage system of example 3, wherein the at least one closable service opening is arranged in the center vehicle frame structure.

Example 5. The energy storage system of any of examples 1-4, wherein the battery disconnection unit is configured to independently disconnect each one of the first, second, third, and fourth battery pack groups.

Example 6. The energy storage system of any of examples 1-5, wherein the battery disconnection unit is configured to concurrently disconnect all of the battery packs in one and the same battery pack group for at least one of the first, second, third and fourth battery pack groups.

Example 7. The energy storage system of any of examples 1-6, wherein the battery packs in each one of the first, second, third, and fourth battery pack groups are configured in a modular design, allowing for the addition of battery packs and/or replacement of individual battery packs.

Example 8. The energy storage system of any of examples 1-7, further comprising a cooling system for cooling the battery packs in the first, second, third and fourth battery pack groups, the cooling system comprising piping extending from the center vehicle frame structure to the first, second, third and fourth battery packs groups via the common utility accessing area.

Example 9. The energy storage system of example 8, wherein the piping comprises at least one maintenance piping portion that is accessible from the common utility accessing area for maintenance and/or diagnostics.

Example 10. The energy storage system of any of examples 8-9, wherein the cooling system comprises a liquid coolant to manage the temperature of the battery packs in the first, second, third and fourth battery pack groups.

Example 11. The energy storage system of any of examples 1-10, wherein each one of the first, second, third, and fourth battery pack groups comprises an associated battery pack venting facing the common utility accessing area.

Example 12. The energy storage system of any of examples 1-11, wherein the battery packs of the first and second battery pack groups are of a first type, and the battery packs of the third and fourth battery pack groups are of a second type, different from the first type.

Example 13. The energy storage system of example 12, wherein the battery packs of the first type comprise a different type of battery cell technology compared to the battery packs of the second type.

Example 14. The energy storage system of example 12, wherein the battery packs of the first type are of a different size compared to the battery packs of the second type.

Example 15. The energy storage system of any of examples 1-14, wherein the center vehicle frame structure comprises at least two longitudinal frame portions forming a compartment for housing the battery disconnection unit.

Example 16. The energy storage system of any of examples 1-15, wherein the center vehicle frame structure is forming a part of the main vehicle frame structure.

Example 17. The energy storage system of any of examples 1-16, wherein the longitudinal extension of the common utility accessing area is determined by a predefined ratio to the combined volume of the first, second, third, and fourth battery pack groups.

Example 18. The energy storage system of any of examples 1-17, wherein the common utility accessing area has a longitudinal extension of at least 0.2 meter.

Example 19. The energy storage system of any of examples 1-18, wherein each one of the battery packs in the first, second, third and fourth battery pack groups does not house a battery disconnection unit comprising at least a contactor.

Example 20. A vehicle comprising the energy storage system of any of examples 1-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage system (30) for a vehicle (1) having a center vehicle frame structure (3) extending in the longitudinal direction of the vehicle, the energy storage system (30) comprising:
- a first battery pack group (130) and a second battery pack group (140) arranged opposite each other on opposite first and second sides (4a, 4b) of the center vehicle frame structure (3), each one of the first and second battery pack groups (130, 140) comprising a plurality of series-connected battery packs (131, 132, 141, 142),
- a third battery pack group (150) and a fourth battery pack group (160) arranged opposite each other on opposite first and second sides (4a, 4b) of the center vehicle frame structure (3), each one of the third and fourth battery pack groups (150, 160) comprising a plurality of series-connected battery packs (151, 152, 161, 162), and
- a battery disconnection unit (170) arranged in the center vehicle frame structure (3), each one of the first, second, third and fourth battery pack groups (130, 140, 150, 160) being associated with an electrical interface (181, 182, 183, 184) electrically connecting the corresponding battery pack group (130, 140, 150, 160) to the battery disconnection unit (170),
wherein the first and third battery pack groups (130, 150) on the first side of the center vehicle frame structure (3) are arranged separated from each other, and wherein the second and fourth battery pack groups (140, 160) on the second side of the center vehicle frame structure (3) are arranged separated from each other, to form a common utility accessing area (190) in which the electrical interfaces (181, 182, 183, 184) of all of the first, second, third and fourth battery pack groups (130, 140, 150, 160) are arranged.

2. The energy storage system (30) of claim 1, wherein the electrical interfaces (181, 182, 183, 184) for the first, second, third, and fourth battery pack groups (130, 140, 150, 160) include connectors (185) that are accessible from the common utility accessing area (190) for maintenance and/or diagnostics.

3. The energy storage system (30) of any of claims 1-2, wherein the battery disconnection unit (170) comprises a housing (172) including at least one closable service opening (173, 174), wherein the electrical interfaces (181, 182, 183, 184) for the first, second, third, and fourth battery pack groups (130, 140, 150, 160) are accessible from the at least one closable service opening (173, 174).

4. The energy storage system (30) of claim 3, wherein the at least one closable service opening (173, 174) is arranged in the center vehicle frame structure (3).

5. The energy storage system (30) of any of claims 1-4, wherein the battery disconnection unit (170) is configured to independently disconnect each one of the first, second, third, and fourth battery pack groups (130, 140, 150, 160).

6. The energy storage system (30) of any of claims 1-5, wherein the battery disconnection unit (170) is configured to concurrently disconnect all of the battery packs in one and the same battery pack group for at least one of the first, second, third and fourth battery pack groups (130, 140, 150, 160).

7. The energy storage system (30) of any of claims 1-6, wherein the battery packs in each one of the first, second, third, and fourth battery pack groups (130, 140, 150, 160) are configured in a modular design, allowing for the addition of battery packs and/or replacement of individual battery packs.

8. The energy storage system (30) of any of claims 1-7, further comprising a cooling system (120) for cooling the battery packs in the first, second, third and fourth battery pack groups (130, 140, 150, 160), the cooling system comprising piping (122) extending from the center vehicle frame structure (3) to the first, second, third and fourth battery packs groups via the common utility accessing area (190).

9. The energy storage system (30) of claim 8, wherein the piping (122) comprises at least one maintenance piping portion (124) that is accessible from the common utility accessing area (190) for maintenance and/or diagnostics.

10. The energy storage system (30) of any of claims 8-9, wherein the cooling system (120) comprises a liquid coolant to manage the temperature of the battery packs in the first, second, third and fourth battery pack groups (130, 140, 150, 160).

11. The energy storage system (30) of any of claims 1-10, wherein the battery packs of the first and second battery pack groups (130, 140) are of a first type, and the battery packs of the third and fourth battery pack groups (150, 160) are of a second type, different from the first type.

12. The energy storage system (30) of claim 11, wherein the battery packs of the first type are of a different size compared to the battery packs of the second type.

13. The energy storage system (30) of any of claims 1-12, wherein the longitudinal extension of the common utility accessing area (190) is determined by a predefined ratio to the combined volume of the first, second, third, and fourth battery pack groups (130, 140, 150, 160).

14. The energy storage system (30) of any of claims 1-13, wherein the common utility accessing area (190) has a longitudinal extension of at least 0.2 meter.

15. A vehicle (1) comprising the energy storage system (30) of any of claims 1-14.
